# EUROPEAN PATENT APPLICATION

(11) **EP 1 464 225 A2**
(43) Date of publication of application: **06.10.2004**
(21) Application number: 04015459.3
(22) Date of filing: 23.02.1999
(51) Int. Cl.: A22C 15/00

(54) **Means for hanging objects**

(30) Priority: 23.02.1998 IT MO980037; 14.04.1998 IT MO980083
(62) Divisional of application: 99103419.0
(71) Applicant: VE.MA.C. S.R.L., 41051 Castelnuovo Rangone (Modena) (IT)
(72) Inventor: Costantini, Maurizio, 41057 Spilamberto (IT); Malagoli, Uliano, 41041 Casinalbo (IT); Vezzali, Franco, 41057 Spilamberto (IT)
(74) Representative: Luppi, Luigi

(57) **Abstract**

Apparatus for suspending products (4) having a loop-shaped portion (12) on supporting means (14, 14a) comprises a station (A) for forming a row of products in which there is arranged means (8, 10, 14, 18) for forming a row of products (4) associated with intermediate supporting means (14); a station (B) for transferring said row from said intermediate supporting means (14) to supporting means (14a) by way of moving means (16, 58, 60) arranged in such a way as to move said intermediate supporting means (14) from said row-forming station (A) to said transfer station (B) and back again.

## Description

The invention relates to means for hanging objects, in particular foodstuffs such as salami, on supporting sticks.

IT-A-M092A000022 discloses a machine for hanging objects on rod-shaped supports, in which the objects are initially hung by an eyelet-shaped end on hooks provided with lower forkshaped appendages by means of which the objects are made to slide axially along a rod-shaped support while respective eyelets of the objects are positioned around the body of the rod-shaped support. The fork hooks are made to tip over in order to allow the products to fall into pre-established positions in such a way that the eyelets engage from above with, and are supported on, the rod-shaped support.

In such a machine it is difficult to hang the products on the fork hooks because an operator has to simultaneously carry out hooking to both appendages of the fork hook in order to allow the product to hang in such a way that its eyelet-shaped end is free for the rod-shaped support to be introduced into it.

Furthermore, in order to maintain each rod-shaped support in an operative position, there is provided a gripper means which acts on both ends of it. In particular, the end from which the products are introduced has a plurality of grippers which are opened and closed in sequence to allow the products to travel along the body of the support while maintaining the end engaged. The sequential opening and closing movements of the grippers are problematical because they must be suitably synchronised, in accordance with the transversal dimensions of the products and the step with which they must be deposited on the rod-shaped support.

In a first aspect of the invention, there is provided an apparatus for hanging products with a loop-shaped portion onto supporting means, characterised'in that it comprises conveying means for receiving and supporting the body of said products while each said loop-shaped portion is threaded onto said supporting means arranged parallel to said conveying means.

In a second aspect of the invention, there is provided an apparatus for hanging products with a loop-shaped portion onto supporting means, characterised in that it comprises tubular intermediate supporting means suitable for receiving said products with each loop-shaped portion substantially winding externally around said intermediate supporting means and transfer means arranged in such a way as to transfer said products from said tubular intermediate supporting means to said supporting means, the latter being initially arranged inside said tubular intermediate supporting means.

In a third aspect of the invention, there is provided a method for threading products onto rod-shaped supports, characterised in that the products are first threaded by a loop-shaped portion thereof onto tubular intermediate supporting means and subsequently transferred onto supporting means initially situated inside said tubular intermediate supporting means.

This makes it possible to hang the products from the supporting means in such a way as to avoid the difficulties involved with synchronising the grippers used in the prior art to support the ends of the supporting means.

In a fourth aspect of the invention, there is provided conveying means arranged in a longitudinal direction to receive products with a loop-shaped portion from supplying means and deliver them to respective supporting means in a higher position, characterised in that said conveying means has at least two consecutive conveyor sections, one of which has a conveying surface inclined transversally relative to said longitudinal direction in such a way as to allow said products to be arranged with their respective loop-shaped portions facing said supporting means.

This aspect of the invention considerably simplifies positioning of the products onto the supporting means.

In a fifth aspect of the invention, there is provided supporting means with a rod-shaped body suitable for receiving loop-shaped portions of products to be hung from said supporting means, characterised in that externally said supporting means has corrugations arranged in a substantially helicoidal manner.

The supporting means may be a definitive supporting means, i.e. intended to support the products for the entire duration of subsequent processing and/or seasoning, or it may be an intermediate supporting means, from which the products must subsequently be transferred onto a separate definitive supporting means.

The provision of helicoidal corrugations allows the products to be precisely positioned in a very simple manner.

In a sixth aspect of the invention, there is provided supporting means suitable for receiving a loop-shaped portion of products to be supported, said supporting means being provided at one end with point means for facilitating introduction of each said loop-shaped portion onto said supporting means.

In a seventh aspect of the invention, there is provided a method for supporting products on supporting means, comprising:
- preparing a row of products with a respective loop-shaped portion engaged on intermediate supporting means;
- subsequently transferring said row from said intermediate supporting means to said supporting means.

In an eighth aspect of the invention, there is provided an apparatus for hanging products with a loop-shaped portion onto supporting means characterised in that it comprises:
- a row-forming station in which there is arranged means for forming a row of products associated with intermediate supporting means;
- a station for transferring said row from said intermediate supporting means to supporting means by way of moving means arranged in such a way as to move said intermediate supporting means from said row-forming station to said transfer station and back again.

In a ninth aspect of the invention, there is provided a method for supporting products on supporting means, comprising forming a row of products on intermediate supporting means in a row-forming station, moving said intermediate supporting means and said row to a transfer station at which said row is transferred from said intermediate supporting means to supporting means, while further intermediate supporting means is moved from said transfer station to said row-forming station.

These aspects of the invention allow a very high productivity to be achieved.

The invention can be better understood and implemented with reference to the description of the attached drawings that illustrate a non-limitative example of implementation, in which:
Figure 1 is a front view of a machine for hanging products, in particular dressed pork products, for example salami;
Figure 2 is a side view of the machine shown in Figure 1;
Figure 3 is an enlarged view of rocking means for lifting products;
Figure 4 is a detail, enlarged and cut away, of introducing means for introducing the products onto rod-shaped supports;

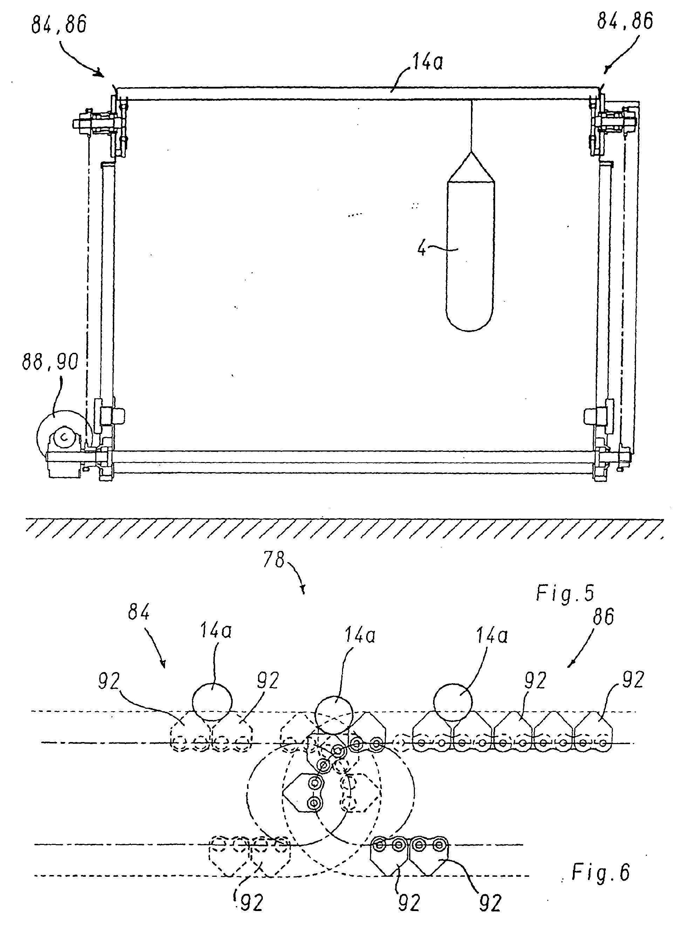

Figure 5 is the sectional view V-V of Figure 2;
Figure 6 is a detail, enlarged and interrupted, of a transfer zone of the supporting means between consecutive conveying means;
Figure 7 is a schematic view, enlarged and interrupted, of coupling means for coupling the point means to the intermediate supporting means with gripper means shown in the disengagement and operative positions, separated by a rotation of 90°;
Figure 8 is a side view of the gripper means of Figure 7;
Figure 9 is a schematic view of the gripper means in the operative position for inserting the point means;

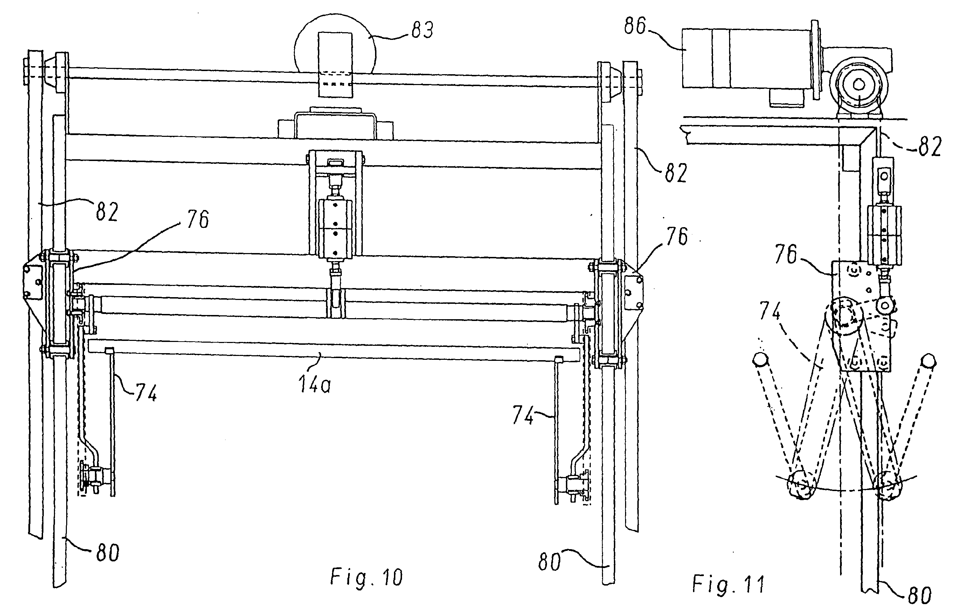

Figure 10 is an enlarged and interrupted view of arm positioning means for positioning the supporting means;
Figure 11 is a right-hand view of Figure 10;
Figure 12 is an interrupted view of intermediate supporting means, provided at one end with a hook-shaped appendage for facilitating the introduction thereon of a loop-shaped portion of products;
Figure 13 is a side view of the intermediate supporting means of Figure 12;
Figure 14 is a view of a product row-forming station, in which the intermediate supporting means of Figure 12 is used;
Figure 15 is a side view of the forming station of Figure 14, highlighting a coupling between the intermediate supporting means and the rocking means for lifting products.

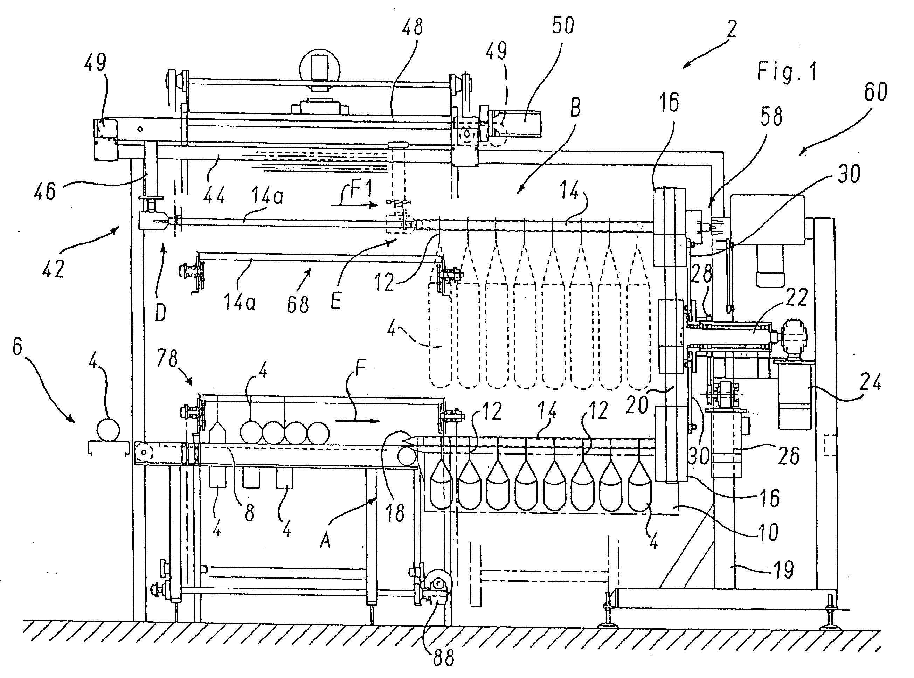

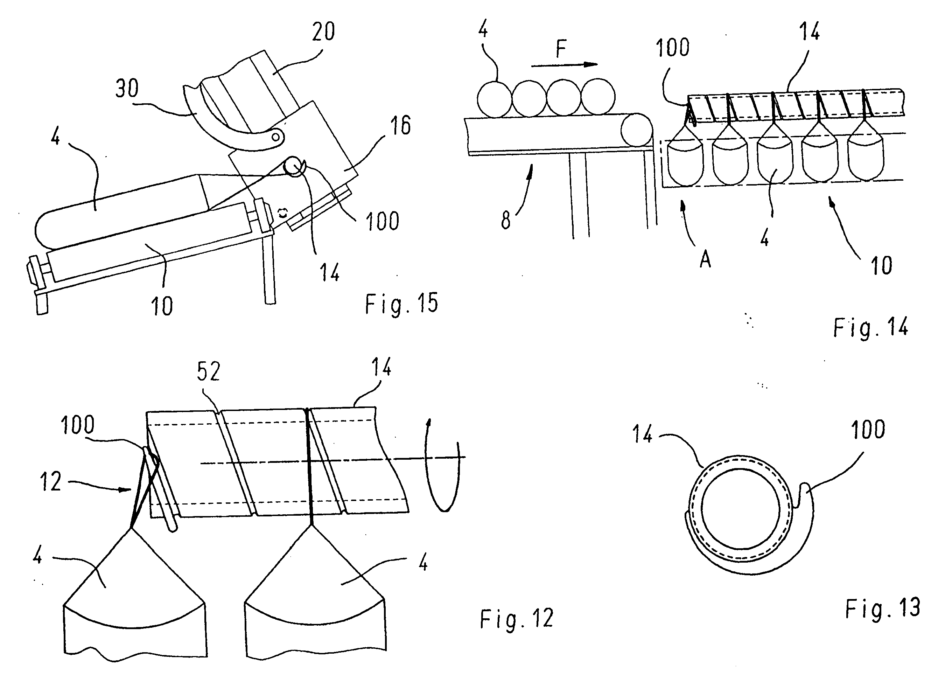

As shown in Figure 1, a machine 2 for hanging products 4 comprises a product supplying line 6 which ends at first conveying means 8, consecutive to which there is arranged second conveying means 10; the first conveying means 8 and the second conveying means 10 are arranged transversally relative to the line 6 and the products 4 can be transported whilst they are positioned transversally on them. The first conveying means 8 defines a horizontal conveying surface for the products 4 along the direction shown by the arrow F, while the second conveying means 10 defines an inclined conveying surface for the products 4, in such a way that a loop-shaped or eyelet-shaped portion 12 of each product 4 can engage in an intermediate rod-shaped supporting means 14, one end of which is fixed to a respective sliding block 16. A further end of the intermediate supporting means 14 is associated with an appendage 100 (Figure 13), or with point means 18, suitable for facilitating insertion of the loop-shaped portion 12 of each product 4 onto said intermediate supporting means.

This way the products 4 coming from the supplying line 6 are aligned alongside each other on the conveying means 8, 10 and can be indexed by the second conveying means 10 while they are engaged with the eyelet-shaped portions 12 on the intermediate supporting means 14 through drive means, which is not shown.

Rocking means 20 is supported in a rotatable manner on a frame body 19 and serves as a guide for a pair of sliding blocks 16 engaged to move along the rocking means 20 by suitable drive means 26 and transmission means 28 comprising bow-shaped connecting rods 30. An intermediate portion of the rocking means 20 is engaged by a shaft 22 which is made to oscillate around its own longitudinal axis by drive means 24 in such a way as to make the rocking means 20 perform angular movements with an amplitude of approximately 180° in one direction and in the opposite direction.

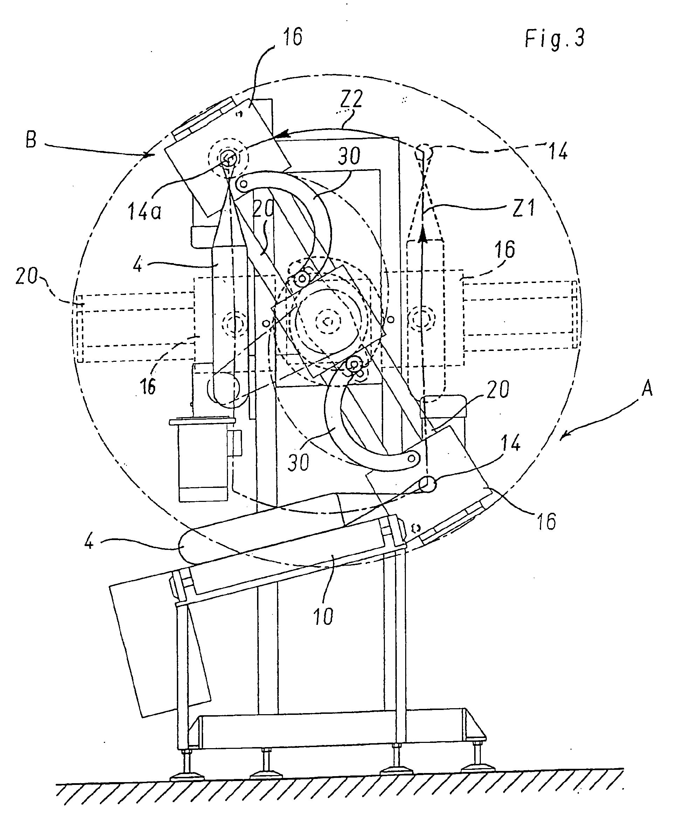

It is thus possible to make the sliding blocks 16 slide simultaneously towards the ends or towards the intermediate portion of the rocking means 20 while the rocking means 20 is made to oscillate by the shaft 22 in order to move the rod-shaped intermediate supporting means 14 from a station A for forming a row of products 4 to a formed row transfer station B, and vice versa, as shown schematically in Figure 3. For reasons of size, it is preferable for the transfer station B to be placed in a raised position, while the row-forming station A is located in a low position, substantially at the same level as the supplying line 6.

The combined movement of the sliding blocks 16 on the rocking means 20 is such that the products 4 are raised according to a trajectory that comprises an initial substantially vertical portion Z1 and a final curved portion Z2. This limits the oscillations of the products 4 during transfer.

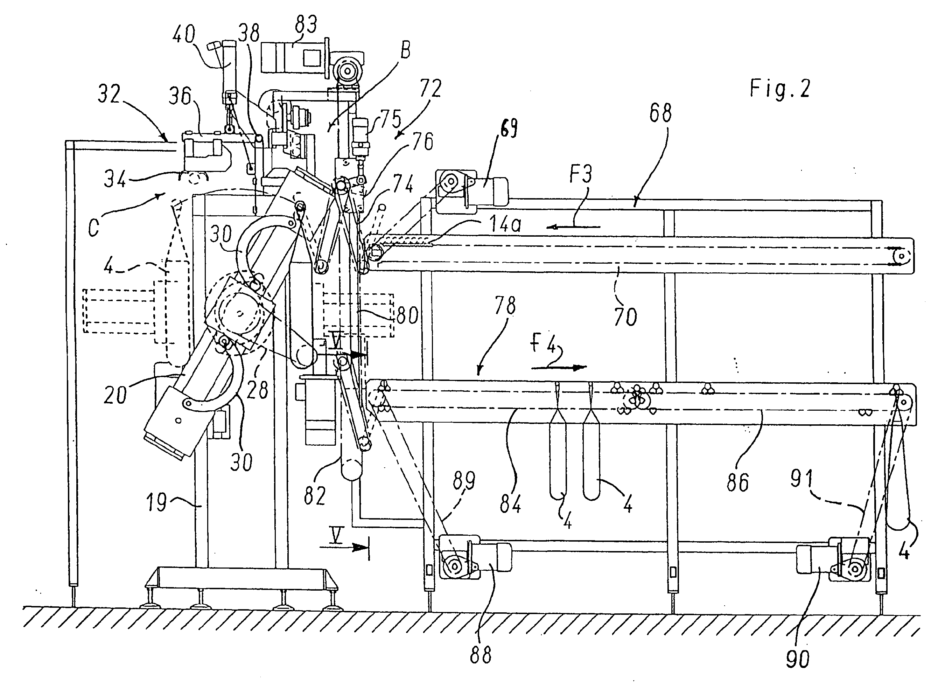

As shown in Figure 2, in the transfer station B the rod-shaped intermediate supporting means 14, if associated with the point means 18, is divested of said means 18 by the action of gripper means 32 provided with jaws 34 suitable for grasping the point means 18 and moving it from the position in which it is inserted on the rod-shaped intermediate supporting means 14 to a neutral waiting position C in which the point means 18 is not engaged on the rod-shaped intermediate supporting means 14. For this purpose, the gripper means 32 is coupled with an angular positioning rod 36 hinged at one end to a pin 38 and movable in an angular manner through a pneumatic cylinder 40.

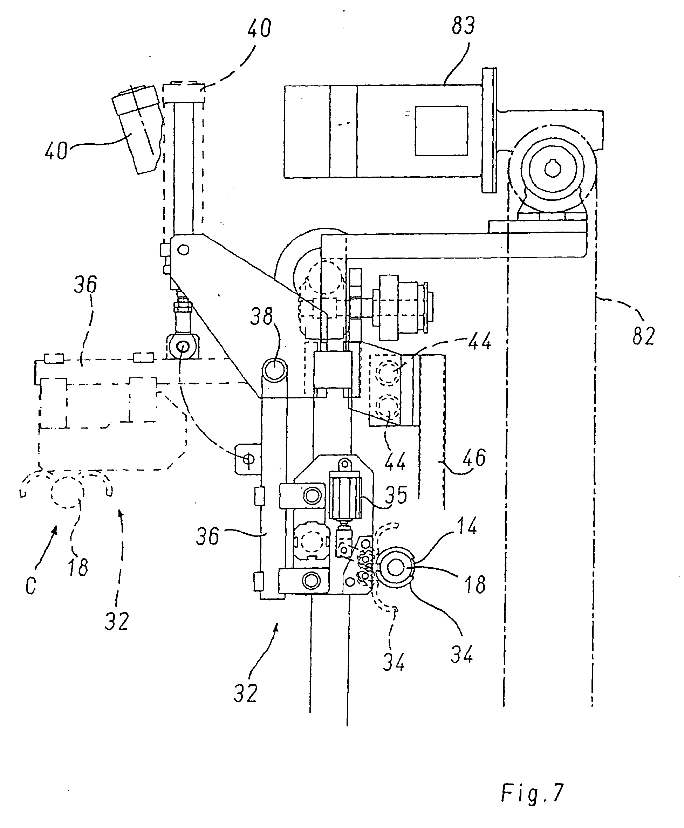

As shown in Figure 7, the jaws 34 can be actuated by a pneumatic cylinder 35 to close and open on the external peripheral surface of the point means 18.

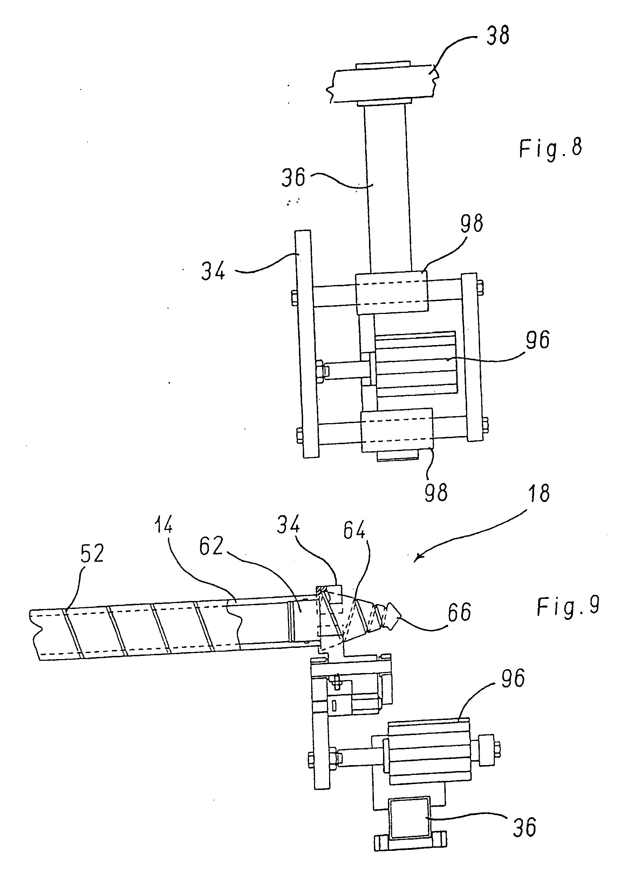

As shown in Figures 8 and 9, the jaws 34 can be moved in a guided manner by guide bushings 98 in a direction parallel to the axis of the intermediate supporting means 14 through a suitable pneumatic cylinder 96.

If the further end of the intermediate supporting means 14 is associated with the appendage 100, the gripper means 32 is not necessary.

Since the rod-shaped intermediate supporting means 14 is tubular, after its end has been freed from the point means 18, it is possible to introduce into it further rod-shaped supporting means, or supporting means, 14a making it enter axially through the free end of the intermediate supporting means 14 in the direction shown by the arrow F1 under the action of further gripper means 42 supported by an arm 46 on a crossbeam 44 of the frame 19 extending along the direction F1.

A belt 48, interconnected with the arm 46 and closed on end pulleys 49 to form a ring and driven by geared motor means 50, allows alternating linear sliding of the further gripper means 42 along the crossbeam 44 so as to move the further rod-shaped supporting means 14a from an external position D, in which it is completely outside of and aligned with the intermediate supporting means 14, to an internal position E, in which the further supporting means 14a is inserted inside the intermediate tubular supporting means 14, and vice versa.

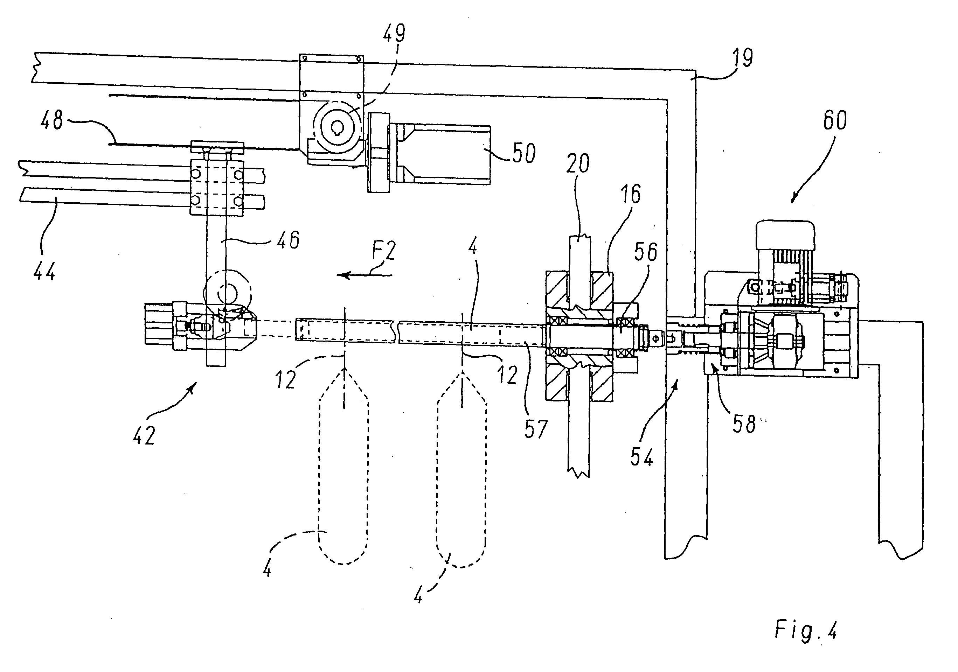

As shown in Figure 4, after the further supporting means 14a has been moved to the internal position E, the intermediate supporting means 14 is made to rotate around its longitudinal axis so that the products 4 are moved along the intermediate supporting means 14 in the direction F2 opposite to direction F1. This is made possible by the presence of a helicoidal groove 52 (Figure 9) obtained externally to the intermediate supporting means 14 and by a spindle means 54 which acts in the transfer station B on a spindle shaft 56 supported in a rotatable manner inside the sliding blocks 16 and provided with an operative end 57 coupled internally with the rod-shaped intermediate supporting means 14. Coupling means 58 and rotational drive means 60 supported on portions of the frame 19 allow the rod-shaped intermediate supporting means 14 to be given the desired rotating movement in the row transfer station B. Therefore the products 4, which have their respective loop-shaped portions 12 engaged in longitudinally consecutive zones of the intermediate supporting means 14, travel along the supporting means 14 in the direction F2 from the intermediate supporting means 14 to the further supporting means 14a. A sensor, which is not shown, acts on the rotational drive means 60 in order to interrupt the command for rotation of the intermediate supporting means 14, and actuates a command to move the further gripper means 42 which extracts the further supporting means 14a from the intermediate supporting means 14 by an amount corresponding to the desired linear step of the products 4 on the further supporting means 14a.

Analogous rotational drive means, which is not shown, may also be provided in the row-forming station A to facilitate insertion of the loop-shaped portions 12 on the intermediate supporting means 14.

As shown in Figure 9, the point means 18 has a tang 62 inserted inside the intermediate supporting means 14, and is externally provided with a helicoidal groove 64 to facilitate insertion of the loop-shaped portions 12 on the intermediate supporting means 14. Furthermore, the point means 18 is provided at its free end opposite tang 62 with an annular projection 66 suitable for preventing the loop-shaped portions 12 from disengaging from the point means 18 in the row-forming station when they are inserted on the intermediate supporting means 14.

In the version shown in Figures from 12 to 15, the intermediate supporting means 14 is provided, at its further end, with an appendage 100 which projects laterally from the profile of the intermediate supporting means 14, said appendage 100 having a shape that constitutes an extension of the helicoidal groove 52. This way an operator can easily introduce the loop-shaped portions 12 of the products 4 onto the intermediate supporting means 14 by hooking them onto the appendage 100 that obliges these portions 12 to engage and slide along the helicoidal groove 52 during the rotation of the intermediate supporting means 14 around its longitudinal axis. Furthermore, the shape of the helicoidal shaped appendage 100 is such as not to obstruct transfer of the products 4 from the intermediate supporting means 14 to the further supporting means 14a in the transfer station B.

As shown in Figure 2, the further supporting means 14a is moved to the transfer station B by supplying means 68 comprising a pair of chains 70 wound to form a ring and driven by drive means 69 and arranged in such a way as to support both ends of the further supporting means 14a and to make it advance towards the row-transfer station B in the direction shown by arrow F3. Preferably, the pair of chains 70 defines a conveying surface of the further supporting means 14a arranged almost at the same height as the row-transfer station B. Between the end of the supplying means 68 and the row-transfer station B there is interposed a pick-up and transfer means 72 comprising oscillating arms 74 which can be moved in an angular manner by a pneumatic cylinder 75 on slide means 76 between a pick-up position in which it engages end zones of the further supporting means 14a from below one at a time, and a delivery position in which it leaves the further supporting means 14a available for the action of the further gripper means 42. This way it is possible to move the further supporting means 14a, on which it is desired to position the products 4, to the transfer station B one after another in sequence. When the further supporting means 14a has been extracted from the intermediate supporting means 14 and is loaded with the products 4 separated according to a pre-established linear step, the oscillating arms 74 position themselves below the further supporting means 14a and receive the products and then transfer them to unloading means 78 below. This occurs through vertical sliding of the slide means 76 along a respective upright means 80 due to the action of a belt drive 82 driven by a geared motor 83 and wound onto respective pulleys to form a ring.

The unloading means 78 of the further supporting means 14a with the products 4 hanging from it is positioned almost at the same height as the row-forming station A.

The unloading means 78 comprises a first pair of chains 84 and a second pair of chains 86 arranged consecutively relative to the first pair of chains 82 driven by separate drive means 88, 90 coupled respectively to the pairs of chains 84, 86 through respective flexible transmission units 89, 91. The further supporting means 14a are progressively unloaded onto the unloading means 78 as they are picked up from row-transfer station B by the oscillating arms 74.

In particular, the further supporting means 14a is deposited on the first pair of chains 84 and is indexed towards the outlet in the direction shown by the arrow F4 until there is formed a loading layer of products 4 of storage means, which is not shown, according to the characteristics of the production plant. When a layer of products 4 has been formed on the first pair of chains 84, it is transferred integrally to the second pair of chains 86 where it remains waiting to be picked up by conveying means towards the storage means, while the oscillating arms 74 can transfer the further supporting means 14a, which has been made available, in the meantime, by the row-transfer station B.

Preferably, the pairs of chains 84, 86 are provided externally with formations of teeth 92 defining spaces suitable for receiving end zones of the further supporting means 14a.

The distinction between intermediate supporting means 14 and supporting means 14a is useful for the purposes of costs, given that the supporting means 14a does not require a helicoidal groove 52.

Therefore in principle solely an intermediate supporting means 14 could be adopted, in which case the row-transfer station B would not be necessary.

## Claims

1. Apparatus for hanging products (4) having a loop-shaped portion (12) on supporting means (14a), **characterised in that** it comprises conveying means (8, 10) for receiving and supporting the body of said products (4) while each said loop-shaped portion (12) is threaded onto supporting means (14, 14a) arranged parallel to said conveying means (8, 10).

2. Apparatus according to claim 1, wherein said conveying means (8, 10) comprises at least one part arranged in such a way that each said loop-shaped portion (12) is facing upwards.

3. Apparatus according to claim 1 or 2, wherein said conveying means (8, 10) and said supporting means (14, 14a) define a station (A) for forming a row of products (4) on the intermediate supporting means (14).

4. Apparatus according to claim 3, wherein said intermediate supporting means (14) is tubular.

5. Apparatus according to any one of claims 1 to 4, wherein said supporting means (14, 14a) has an entrance end for each said loop-shaped portion (12) which is associated with an appendage (100) projecting from said supporting means (14).

6. Apparatus according to claim 5, wherein said appendage (100) is hook-shaped.

7. Apparatus according to claim 5, or 6, wherein said supporting means (14, 14a) is peripherally provided with helicoidal corrugations (52).

8. Apparatus according to claim 7, wherein said appendage (100) has a shape that is an extension of said helicoidal corrugations (52).

9. Apparatus according to any one of claims 1 to 8, wherein said supporting means (14, 14a) has an entrance end for each said loop-shaped portion (12) which can be coupled with point means (18).

10. Apparatus according to claim 9, wherein said supporting means (14, 14a) and/or said point means (18) are peripherally provided with helicoidal corrugations (52; 64).

11. Apparatus according to any one of claims 1 to 10, wherein said supporting means (14) has an end, opposite to the entrance end for each said loop-shaped portion (12), associated with rocking means (20), which can be moved in an oscillating manner between said station (A) for forming a row of products (4) and a station (B) for transferring the formed row to definitive supporting means (14a), and vice versa.

12. Apparatus according to claim 11, wherein said rocking means (22) receives in a guided manner sliding blocks (16) which slide thereon and support said supporting means (14).

13. Apparatus according to claim 11, or 12, wherein said transfer station (B) is provided with transfer means (42, 58, 60) to transfer to a supporting means (14a) the formed row initially lying on said intermediate supporting means (14).

14. Apparatus according to claim 13, wherein said transfer means comprises linear gripper means (42) suitable for moving said supporting means (14a) axially inside said intermediate supporting means (14).

15. Apparatus according to claim 13, or 14, wherein said transfer means comprises rotational drive means (60) to rotate said supporting means (14).

16. Apparatus according to any one of claims 13 to 15, wherein said transfer means comprises coupling means (58) for coupling or decoupling said supporting means (14) from the respective rotational drive means (60)

17. Apparatus according to any one of claims 11 to 16, wherein in said formed row transfer station (B) there is provided gripper means (32) suitable for acting on said point means (18) for picking it up from, and coupling it onto, said supporting means (14).

18. Apparatus according to any one of claims 11 to 17, wherein between said station (A) for forming a row of products (4) and said station (B) for transferring the formed row there is movable pick-up and transfer means (72), which is suitable for picking up supporting means (14a) from the respective supplying means (68) and delivering said supporting means (14a) with products (4) hanging therefrom to unloading means (78).

19. Apparatus according to claim 18, wherein said pick-up and transfer means (72) comprises oscillating arms (74) supported on a vertically movable slide means (76).

20. Apparatus according to claim 18, or 19, wherein said supplying means (68) and said unloading means (78) comprise pairs of flexible elements (70, 84, 86) closed to form a ring and driven by respective drive means (69, 88, 89).

21. Apparatus according to claim 20, wherein said unloading means (78) comprises two pairs of consecutive flexible elements (84, 86) coupled with independent drive means (88, 90).

22. Apparatus according to claim 20, or 21, wherein said flexible drive means is provided externally with teeth (92) defining between them spaces for holding the end zones of the supporting means (14, 14a).

23. Apparatus for hanging products (4) having a loop-shaped portion (12) on a supporting means (14a), **characterised in that** it comprises tubular intermediate supporting means (14) suitable for receiving said products (4) with each loop-shaped portion (12) substantially winding externally around said intermediate supporting means (14) and transfer means (42, 58, 60) arranged in such a way as to transfer said products (4) from said tubular intermediate supporting means (14) to said supporting means (14a), the latter being initially arranged inside said intermediate supporting means (14).

24. Apparatus according to claim 23, and further comprising a conveying means (8, 10) for receiving and supporting the body of said products (4) while each said loop-shaped portion (12) is threaded onto supporting means (14, 14a) arranged parallel to said conveying means (8, 10).

25. Apparatus according to claim 24, wherein said conveying means (8, 10) comprises at least one part arranged in such a way that each said loop-shaped portion (12) is facing upwards.

26. Apparatus according to claim 24, or 25, wherein said conveying means (8, 10) and said supporting means (14, 14a) define a station (A) for forming a row of products (4) on intermediate supporting means (14).

27. Apparatus according to any one of claims 23 to 26, wherein said intermediate supporting means (14) has an entrance end for each said loop-shaped portion (12) which is associated with an appendage (100) projecting from said intermediate supporting means (14).

28. Apparatus according to claim 27, wherein said appendage (100) is hook-shaped.

29. Apparatus according to claim 27, or 28, wherein said supporting means (14, 14a) is peripherally provided with helicoidal corrugations (52).

30. Apparatus according to claim 29, wherein said appendage (100) has a shape that constitutes an extension of said helicoidal corrugations (52).

31. Apparatus according to any one of claims 23 to 30, in which said intermediate supporting means (14) has an entrance end for each said loop-shaped portion (12) which can be coupled to point means (18).

32. Apparatus according to claim 31, wherein said supporting means (14, 14a) and/or said point means (18) are peripherally provided with helicoidal corrugations (52; 64).

33. Apparatus according to any one of claims 23 to 32, wherein said intermediate supporting means (14) has an end opposite to the entrance end for each said loop-shaped portion (12) and associated with rocking means (20), which can be moved in an oscillating manner between said station (A) for forming a row of products (4) and a station (B) for transferring the formed row onto a definitive supporting means (14a), and vice versa.

34. Apparatus according to claim 33, wherein said rocking means (22) receives in a guided manner sliding blocks (16) which slide on it and support said supporting means (14).

35. Apparatus according to any one of claims 23 to 34, wherein said transfer means comprises a linear gripper means (42) suitable for moving said supporting means (14a) axially inside said intermediate supporting means (14).

36. Apparatus according to any one of claims from 23 to 35, wherein said transfer means comprises rotational drive means (60) to rotate said supporting means (14).

37. Apparatus according to any one of claims from 23 to 36, wherein said transfer means comprises coupling means (58) for coupling or decoupling said supporting means (14) from the respective rotational drive means (60).

38. Apparatus according to any one of claims 33 to 37, wherein in said station (B) for transferring the formed row there is provided gripper means (32) suitable for acting on said point means (18) for picking it up from, and coupling it onto, said supporting means (14).

39. Apparatus according to any of claims 33 to 38, wherein between said station (A) for forming a row of products (4) and said station (B) for transferring the formed row there is movable a pick-up and transfer means (72) suitable for picking up a supporting means (14a) from the respective supplying means (68) and delivering said supporting means (14a) with the products (4) hanging therefrom to the unloading means (78).

40. Apparatus according to claim 39, wherein said pick-up and transfer means (72) comprises oscillating arms (74) supported on a vertically moving slide means (76).

41. Apparatus according to claim 39, or 40, wherein said supplying means (68) and said unloading means (78) comprise flexible elements (70, 84, 86) closed so as to form a ring and driven by respective drive means (69, 88, 89).

42. Apparatus according to claim 41, wherein said unloading means (78) comprises two pairs of consecutive flexible elements (84, 86) coupled with independent drive means (88, 90).

43. Apparatus according to claim 41, or 42, wherein said flexible drive means is provided externally with teeth (92) defining spaces between them for holding end zones of the supporting means (14, 14a).

44. Method for threading products (4) onto the rod-shaped supporting means (14; 14a), **characterised in that** the products (4) are first threaded by a loop-shaped portion (12) thereof onto a tubular intermediate supporting means (14), and are subsequently transferred to a supporting means (14a) initially situated inside said tubular intermediate supporting means.

45. Method according to claim 44, wherein said intermediate supporting means (14) rotate around its axis in order to move the products from said intermediate supporting means (14) to said supporting means (14a).

46. Method according to claim 45, wherein by rotating said intermediate supporting means (14a), said products (4) are moved axially because said loop-shaped portions (12) are engaged in helicoidal corrugations (52) of said intermediate supporting means (14).

47. Conveying means (8, 10) arranged along a longitudinal direction (F) for receiving products (4) with a loop-shaped portion (12) from supplying means (6) and delivering them to respective supporting means (14) in a higher position, **characterised in that** said conveying means (8, 10) has at least two consecutive conveyor sections, one (10) of which has a conveying surface inclined transversally relative to said longitudinal direction (F) so as to allow said products (4) to be arranged with their respective loop-shaped portions (12) facing towards said supporting means (14).

48. Supporting means (14) suitable for receiving a loop-shaped portion (12) of products (4) to be supported, said supporting means (14) being provided at one end with a point means (18) for facilitating introduction of each said loop-shaped portion (12) onto said supporting means.

49. Supporting means according to claim 48, wherein said point means (18) is provided with corrugations (64) arranged in a substantially helicoidal manner.

50. Method for supporting products (4) on a supporting means (14a), comprising:
- preparing a row of products (4) with a respective loop-shaped portion (12) engaged on intermediate supporting means (14);
- subsequently transferring said row from said intermediate supporting means (14) to said supporting means (14a).

51. Method according to claim 50, wherein said preparing comprises engaging said loop-shaped portion (12) to an appendage (100) of said intermediate supporting means (14).

52. Method according to claim 50, or 51, wherein said preparing comprises engaging said loop-shaped portion (12) to point means (18) associated with said intermediate supporting means (14).

53. Method according to claim 50, wherein said transferring comprises rotating said intermediate supporting means (14) around its axis.

54. Method according to any one of claims 50 to 53, wherein by rotating said intermediate supporting means (14a), said products (4) are moved axially because said loop-shaped portions (12) are engaged in helicoidal corrugations (52) of said intermediate supporting means (14).

55. Method according to any one of claims 50 to 54, wherein said transferring comprises axially extracting said supporting means (14a) from said intermediate supporting means (14).

56. Apparatus for hanging products (4) having a loop-shaped portion (12) on supporting means (14, 14a), **characterised in that** it comprises:
- a station (A) for forming a row of products in which there is arranged means (8, 10, 14, 18; 8, 10, 14, 100) for forming a row of products (4) associated with intermediate supporting means (14);
- a station (B) for transferring said row from said intermediate supporting means (14) to supporting means (14a) by way of moving means (16, 58, 60) arranged in such a way as to move said intermediate supporting means (14) from said row-forming station (A) to said transfer station (B) and back again.

57. Method for supporting products (4) on supporting means (14a), comprising forming a row of products on intermediate supporting means (14) in a row-forming station (A), moving said intermediate supporting means (14) and said row to a transfer station (B) in which said row is transferred from said intermediate supporting means (14) to supporting means (14a), while further intermediate supporting means (14) is moved from said transfer station (B) to said row-forming station (A).
